# EUROPEAN PATENT APPLICATION

(11) **EP 4 614 013 A2**
(43) Date of publication of application: **10.09.2025**
(21) Application number: 25162638.8
(22) Date of filing: 10.03.2025
(51) Int. Cl.: F16C 7/02

(54) **3D PRINTED LINKAGE**

(30) Priority: 08.03.2024 US 202463562891 P; 17.02.2025 US 202519055274
(71) Applicant: Avtechtyee, Inc., Everett, WA 98203 (US)
(72) Inventor: RAFINER, Nicolas Karl, WA 98012, Mill Creek (US)
(74) Representative: Calysta NV

(57) **Abstract**

A 3D printed linkage (10) includes a first end (40) opposite a second end (42) and a pin (38) or insert proximate each end for connecting a connecting member thereto.

## Description

### CROSS-REFERENCE TO RELATED APPLICATION

This application is based upon and claims priority to U.S. Provisional Application No. 63/562,891, filed on March 8, 2024, the contents of which are fully incorporated herein by reference.

### BACKGROUND

In vehicles such as aircraft, it is beneficial to use linkages (e.g. control rods) in form of composite tube assemblies. Composite tube assemblies are lighter and stronger than comparable metal tube assemblies. Composite tube assemblies typically incorporate carbon fiber tubes and are lighter in weight, more resistant to corrosion, stronger and more inert relative to substantially metallic tubes. Composite tube assemblies may be used in multiple applications, as for example as control rods or in an overhead luggage bin (or stow bin) assemblies in an aircraft to provide structural support both when the bin is in an open configuration and when it is closed. Composite tube assemblies may also be used as structural inserts in vehicle frames.

Composite tube assemblies incorporate a fitting or insert (individually and collectively referred to herein for convenience as "fitting"), such as a Hylock fitting, at each end of the composite tube. A clevis bolt, end rod, or other type of connecting insert is connected to the fitting. Each composite tube end is mated over an outer surface of its corresponding fitting. A typical fitting is described on U.S. Patent No. 8,205,315, the contents of which are incorporated herein by reference. To connect the fitting to the composite tube, the composite tube end is compressed over the fitting to form the composite tube assembly. Composite tube assemblies all have similar shapes (i.e., cylindrical shapes) and as such are limited in their use. Linkages with non-traditional shapes are desired.

### SUMMARY

In an example embodiment, a linkage includes a body formed by 3D printing, the body includes a main body portion, a first arm extending from a first side of the main body portion, a second arm spaced apart from the first arm and extending from the first side of the main body portion, a third arm extending from second side of the main body portion opposite the first side, and a fourth arm spaced apart from the third arm and extending from the second side of the main body portion. A first opening is formed through the first arm, and a second opening is formed through the second arm, the second opening being axially aligned with the first opening. A third opening is formed through the third arm, and a fourth opening is formed through the fourth arm, the fourth opening axially aligned with the third opening. In another example embodiment, the linkage also includes a first bearing in the first opening, a second bearing in the second opening, a third bearing in the third opening, and a fourth bearing in the fourth opening. In yet another example embodiment, the linkage further includes a first pin penetrating the first and second openings, and a second pin penetrating the third and fourth openings. In a further example embodiment, the body is formed by 3D printing with onyx plastics or nylons reinforced with a continuous fiber. In yet a further example embodiment, the continuous fiber is fiber selected from the group of fibers consisting essentially of carbon fiber, Kevlar, and fiberglass fibers. In one example embodiment, the body has a tensile strength of at least 9000 lbf. In another example embodiment, the linkage also includes an opening penetrating from one side to an opposite side of the main body portion. In yet another example embodiment, each distal end of each arm is rounded defining an arc when viewed along a plate perpendicular to the axis the openings. In a further example embodiment, the body is not tubular.

In an example embodiment, a linkage includes a 3D printed body extending from a first end to a second end, a first insert within the body proximate the first end, the first insert not extending beyond the first end, a second insert within the body proximate the second end, the second insert not extending beyond the second end, a first connecting member penetrating the first end and connected to the first insert, and a second connecting member penetrating the second end and connected to the second insert. In another example embodiment, the first connecting member is threaded to the first insert and the second connecting member is threaded to the second insert. In yet another example embodiment, the inserts are press-fitted in the body. In a further example embodiment, each insert has a first end opposite a second end defining a height therebetween, wherein an opening extends transversely through the height between the first and second ends of the insert for receiving its corresponding connecting member. In yet a further example embodiment, at least part of the first end of each insert and part of the second end of each insert is covered by a portion of the body. In one example embodiment, the body includes a first side extending from the first end to the second end and a second side extending from the first end to the second end and wherein each insert is sandwiched between the first and second sides of the body. In another example embodiment, the body includes a first side extending from the first end to the second end and a second side extending from the first end to the second end and wherein each insert extends at least from the first side to the second side of the body. In yet another example embodiment, the first and second ends are arcuate. In a further example embodiment, the portion of each end of the body penetrated by its corresponding connecting member is rounded. In yet a further example embodiment, the body is formed by 3D printing with onyx plastics or nylons reinforced with a continuous fiber. In an example embodiment, the continuous fiber is fiber selected from the group of fibers consisting essentially of carbon fiber, Kevlar, and fiberglass fibers. In another example embodiment, the body has a tensile strength of at least 9000 lbf. In yet another example embodiment, also includes an opening penetrating from one side to an opposite side of the main body portion. In a further example embodiment, the body is not tubular. In a further example embodiment, each insert has a non-circular outer surface shape in cross-section perpendicular to its longitudinal axis.

### BRIEF DESCRIPTION OF THE DRAWINGS

FIGS. 1A, 1B, 1C, and 1D depict a top view, side view, bottom view and cross-sectional view (taken along section A-A), respectively, of an example embodiment linkage having a 3D printed body.
FIG. 2A depicts side views of a partially printed 3D example embodiment linkage body and example embodiment inserts to be inserted therein.
FIG. 2B depicts a side of the partially 3D printed linkage body shown in FIG. 2A with the inserts inserted in recesses within the partially 3D printed body.
FIG. 2C depicts a side view of the completed 3D printed linkage body of the example embodiment body shown in FIGS. 2A and 2B.
FIG. 2D depicts a side view of the 3D printed linkage body as shown in FIG. 2C with clevis bolts attached.
FIG. 2E depicts a cross-sectional view of the 3D printed linkage body as shown in FIG. 2C (taken along section B-B shown in FIG.2D) with clevis bolts attached.
FIGS. 3A, 3B, and 3C depict a top view, side view and perspective view, respectively, of another example embodiment 3D printed linkage body.

### DESCRIPTION

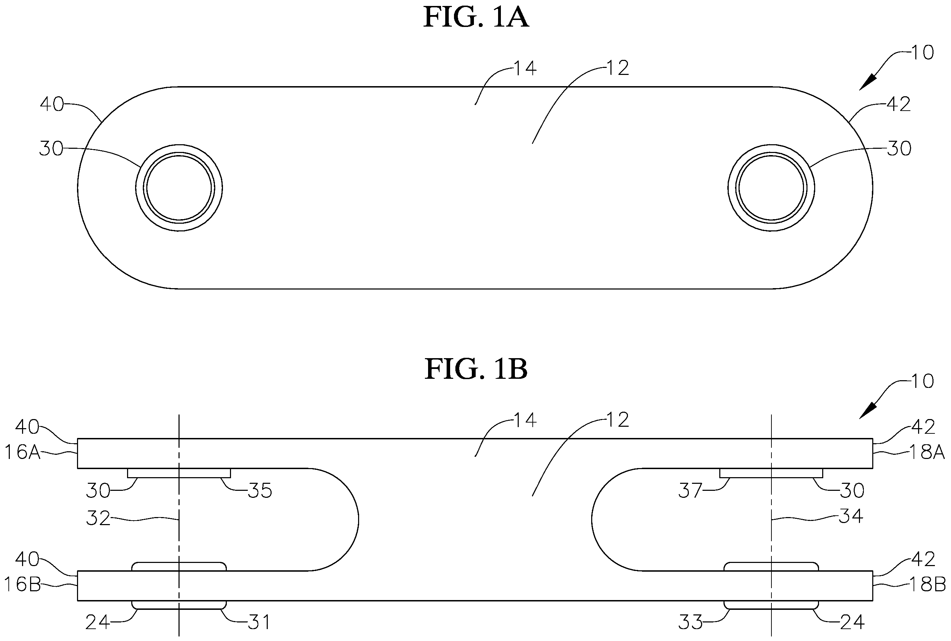

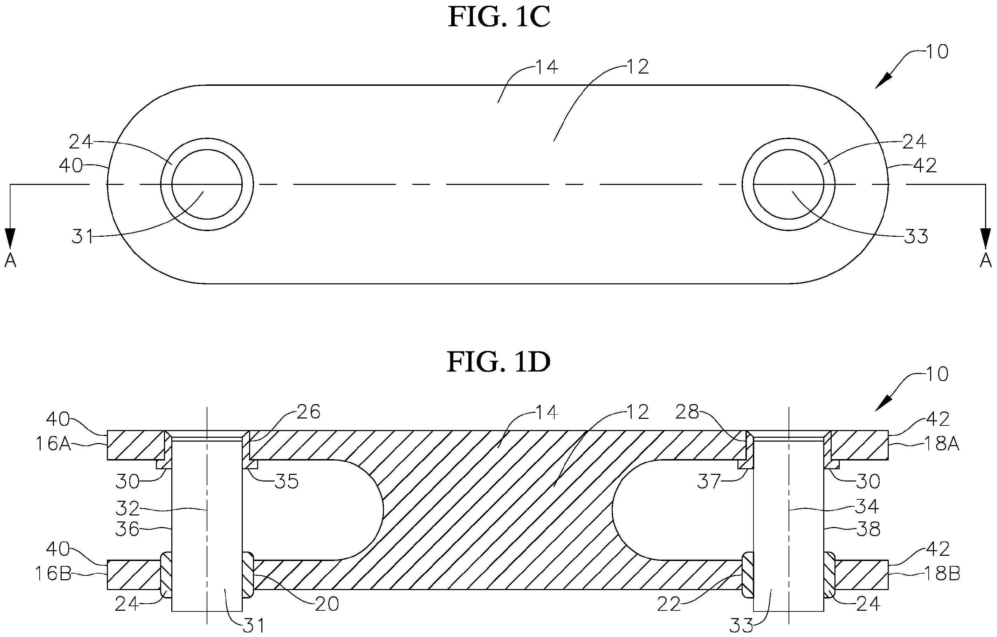

In an example embodiment, a linkage 10 has a body 12 that is formed by 3D printing. In an example embodiment, the body is 3D printed using onyx plastics or nylons reinforced with a continuous fiber, as shown in FIGS. 1A, 1B, 1C, and 1D. Example onyx plastics on nylons are Onyx FR and Onyx FR-A provided by Markforged. Example continuous fibers are Carbon Fiber FR and Carbon Fiber FR-A also provided by Markforged. In an example embodiment the continuous fiber may also be a carbon fiber, Kevlar or fiberglass. 3D printing of objects is well known in the art. 3D printing is an additive manufacturing process that creates a physical object from a digital design. The process works by laying down thin layers of material in the form of liquid or powdered plastic, metal, fiber or cement, and then fusing the layers together.

In the shown example embodiment, the body 12 is elongated. In an example embodiment, the body 12 includes a main body portion 14 and two pairs of spaced apart arms 16A, 16B, and 18A, 18B extending from opposite sides the of the main body portion. Each pair of arms includes a terminal arm 16A, 18A and a through arm 16B, 18B spaced apart from its corresponding terminal arm. Each through arm has a transverse through hole 20, 22 that receives a bearing 24 which is interference-fitted or press-fitted therethrough. Each terminal arm has an opening 26, 28 receives a terminal bearing 30. Each through bearing defines a passage 31, 33, therethrough. In an example embodiment, each terminal bearing also defines a passage 35, 37, but such passage may not penetrate through its entire corresponding arm. The through bearing and terminal bearing in the arms on one side of the main body portion are axially aligned along a corresponding axis 32, 34. In this regard, a connecting pin 36, 38 may be received through each through passage of each through bearing and into the corresponding passage of the terminal bearing allowing for the connection of the linkage to a desired structure. In the shown example embodiment, the opposite ends 40, 42 of the arms are rounded having continuous smooth radii to reduce stress concentrations. In other example embodiments, through bearings instead of terminal bearings are mounted through each terminal arm opening 26, 28. With this embodiment the pins 36, 38 penetrate and extend beyond both of the bearings they each penetrate. A lock member (or multiple lock members) may then be used on the pin as necessary, as for example by threading onto the pin, for preventing the pin from complete withdrawing from each of its corresponding bearings. A lock member may be a nut threaded on an end of an outer surface of the pin.

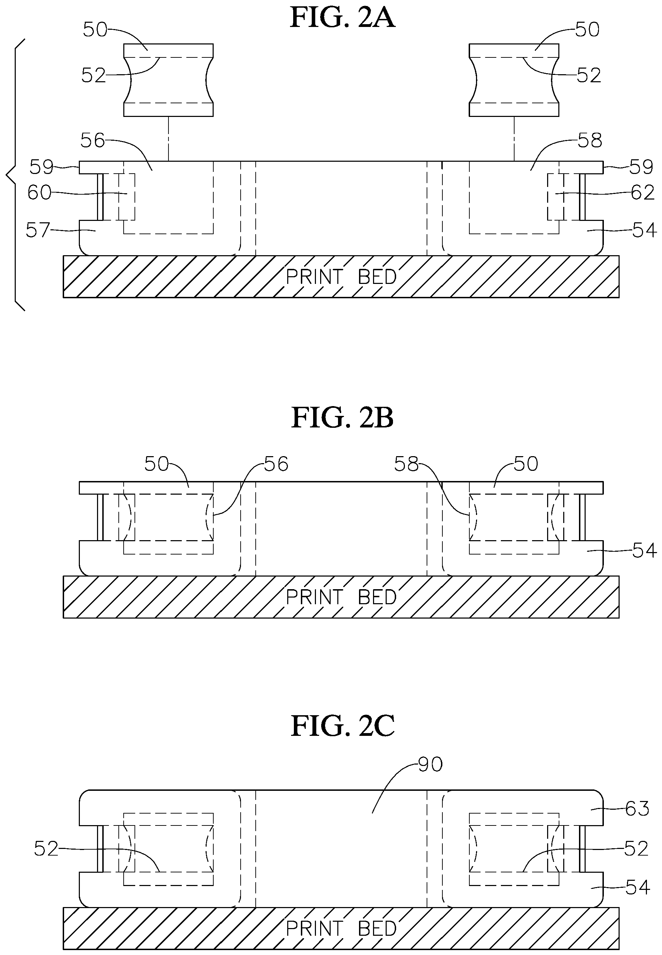

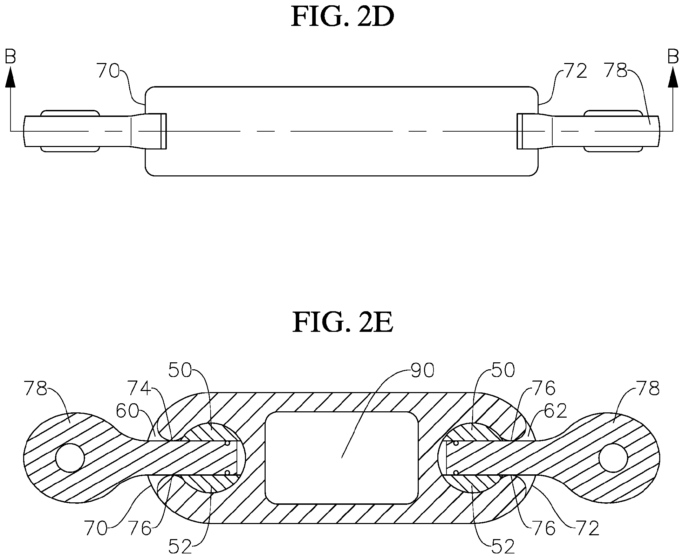

In another example embodiment, a linkage 10 is 3D printed with embedded inserts 50 having transverse threaded inner openings 52 to allow for a threading of a connector, such as a clevis bolt or end rod, as for example shown in FIGS. 2A, 2B, 2C, 2D, and 2E. Each threaded inner opening 52 extends transversely through at least part of each insert. In an example embodiment, a longitudinal portion 54 of the linkage 10 is 3D printed having two recesses 56, 58, i.e., a recess proximate each end 57, 59 of the linkage, as for example shown in FIG. 2A. A transverse opening 60, 62 extends transversely from each recess 56, 58 to its corresponding linkage end 57, 59. An insert 50 is fitted, interference fitted or press-fitted into each recess 56, 58. In the shown example embodiment, each insert 50 has a cylindrical outer surface with its corresponding transverse threaded opening 52 being formed transverse to the central longitudinal axis of each insert cylindrical outer surface. In other example embodiments, each insert may have other geometrical outer surface shapes in cross-section perpendicular to its central longitudinal axis. For example, it may have a square shape, an elliptical shape, or other geometric or non-circular shape. In such case the recesses have complementary shapes to accept the inserts. By using inserts having shapes that not circular in cross-section and which are inserted in corresponding complementary recesses, they are prevented from rotating about their central longitudinal axis, when inserted into their corresponding recesses. Another way to restrict the inserts from rotating is by forming the outer surface of each insert to have depression or projection and the recesses to have a corresponding projection or depression for mating with the depression (or projection) of the inserts. When the inserts 50 are fitted within their corresponding recesses 56, 58, their transverse threaded openings are axially aligned with their corresponding linkage transverse openings 60, 62, as for example shown in FIGS. 2B and 2C.

After the inserts 50 are fitted in their corresponding recesses 56, 58, as for example shown if FIG. 2B, a remainder portion 63 of the linkage is 3D printed, encapsulating both inserts, as for example shown in FIG. 2C. The ends of the linkage 70, 72 as well as the boundaries 74, 76 defining each longitudinally extending opening 60, 62 are rounded with smooth continuous radii to reduce stress concentrations, as for example shown in FIGS. 2D and 2E.

A connecting member, such as a clevis bolt or end rod 78 is placed through the linkage transverse opening 60, 62 and threaded to its corresponding insert transverse threaded opening 52 as for example shown in FIGS. 2D and 2E.

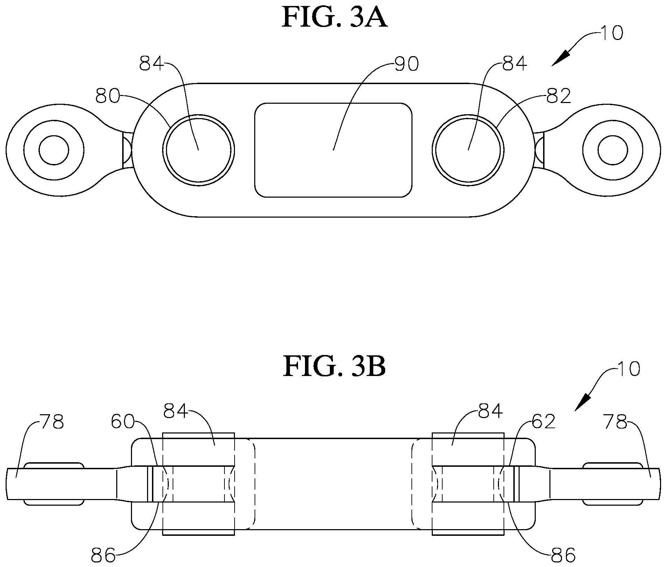

In a further example embodiment, the entire linkage 10 is 3D printed but instead of recesses, it is printed with openings 80, 82 proximate each end to receive the inserts 84 which are interference or press-fitted therein, as for example shown in FIGS. 3A and 3B. In example embodiments, the openings and the inserts 84 in cross-section may have complementary non-circular geometries such as square, elliptical, etc. In this regard, once the insert 84 is fitted within its corresponding opening 80, 82 it is prevented from rotating relative to such opening due to its cross-sectional shape. In an example embodiments, the openings 80, 82 may be fitted with the appropriate bearings. The inserts 84, similarly to the inserts 50 in the example embodiments described herein, have a transverse threaded opening 86 to allow for the threading of a connecting members, such as a clevis bolt or end rod 78. In other example embodiments, the inserts 84 may be threaded in the corresponding openings 80, 82. The openings 80, 82 may penetrate the entire insert thickness or may extend to one exterior surface of the insert but have sufficient depth such that when they receive their corresponding insert, the transverse threaded opening 84 of such insert may be aligned with its corresponding longitudinally extending opening 60, 62.

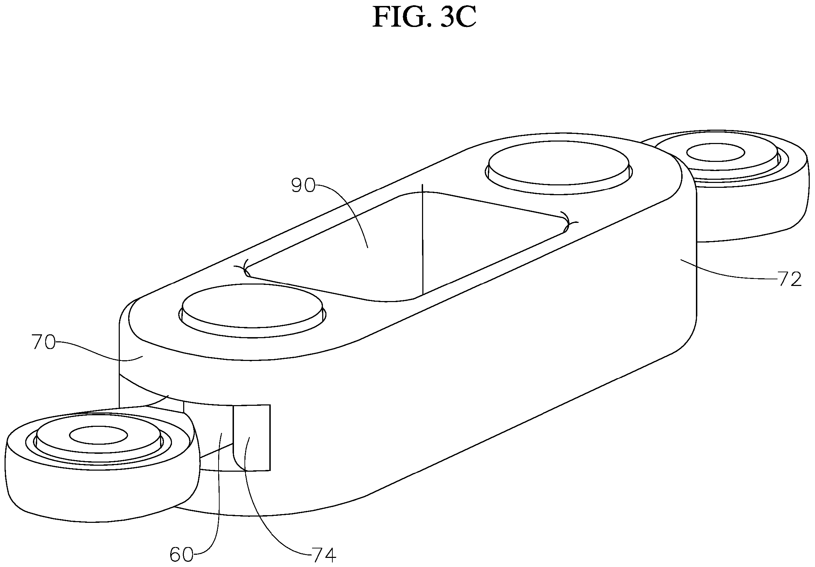

In any example embodiment one or more openings 90 may be formed through the body of the linkage for reducing weight. For example, in the embodiments shown in FIGS. 2C and 3C, an opening 90 is formed through the body reducing weight. Applicants have discovered that through 3D printing they are able to make linkages with non-traditional shapes while maintaining the desired strength. To improve the strength of the linkage, the linkage may be printed at an angle. In other words, instead of being printed with its longitudinal axis parallel to a print bed, as for example shown in FIGS. 2A, 2B, and 2C, it is printed with its longitudinal axis being at an angle to the print bed of the 3D printing device. In an example embodiment, this angle is between 10 to 65 degrees. Applicant's believer that they can optimize the axial tensile, torsional and shear strength of the linkage by 3D printing it at an angle of 45 degrees. Example embodiment 3D printed linkages described herein have an axial strength of at least 9000 lbf. In a further example embodiment, linkage having a 3D printed body according to any embodiment described herein has a tensile strength of at least 13000 lbf. In another example embodiment, an example embodiment 3D printed linkage described herein has an axial strength of at least 300 lbf. In a further example embodiment, an example embodiment 3D printed linkage described herein has an axial strength of at least 500 lbf.

While 3D printed linkages have been described herein in detail with particular references to example embodiments thereof, the example embodiments described herein are not intended to be exhaustive or to limit the scope of the invention to the exact forms disclosed. Persons skilled in the art and technology to which this invention pertains will appreciate that alterations and changes in the described structures and methods of assembly and operation can be practiced without meaningfully departing from the principles, spirit, and scope of this invention, as set forth in the following claims. Although relative terms such as "outer," "inner," "upper," "lower," "below," "above," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Furthermore, as used herein, when a component is referred to as being "on" another component, it can be directly on the other component or components may also be present therebetween. Moreover, when a component is component is referred to as being "coupled" to another component, it can be directly attached to the other component or intervening components may be present therebetween.

The invention can e.g. be summarized by one or more of the following clauses:
1. A linkage comprising:
   a body formed by 3D printing, said body comprising,
   a main body portion;
   a first arm extending from a first side of the main body portion;
   a second arm spaced apart from the first arm and extending from the first side of the main body portion;
   a third arm extending from second side of the main body portion opposite the first side;
   a fourth arm spaced apart from the third arm and extending from the second side of the main body portion;
   a first opening formed through the first arm;
   a second opening formed through the second arm, said second opening being axially aligned with the first opening;
   a third opening formed through the third arm; and
   a fourth opening formed through the fourth arm, said fourth opening axially aligned with the third opening.
2. The linkage as recited in clause 1 further comprising:
   a first bearing in the first opening;
   a second bearing in the second opening;
   a third bearing in the third opening; and
   a fourth bearing in the fourth opening.
3. The linkage as recited in clause 2 further comprising:
   a first pin penetrating the first and second openings; and
   a second pin penetrating the third and fourth openings.
4. The linkage as recited in any of the preceding clauses, wherein the body is formed by 3D printing with onyx plastics or nylons reinforced with a continuous fiber.
5. The linkage as recited in clause 4, wherein the continuous fiber is fiber selected from the group of fibers consisting essentially of carbon fiber, Kevlar, and fiberglass fibers.
6. The linkage as recited in any of the preceding clauses, wherein the body has a tensile strength of at least 9000 lbf.
7. The linkage as recited in any of the preceding clauses, further comprising an opening penetrating from one side to an opposite side of the main body portion.
8. The linkage as recited in any of the preceding clauses, wherein each distal end of each arm is rounded defining an arc when viewed along a plate perpendicular to the axis the openings.
9. The linkage as recited in any of the preceding clauses, wherein the body is not tubular.
10. A linkage comprising:
   a 3D printed body extending from a first end to a second end;
   a first insert within the body proximate the first end, said first insert not extending beyond the first end;
   a second insert within the body proximate the second end, said second insert not extending beyond the second end;
   a first connecting member penetrating the first end and connected to the first insert; and
   a second connecting member penetrating the second end and connected to the second insert.
11. The linkage as recited in clause 10, wherein the first connecting member is threaded to the first insert and the second connecting member is threaded to the second insert.
12. The linkage as recited in clause 10 or clause 11, wherein the inserts are press-fitted in the body.
13. The linkage as recited in any of the preceding clauses 10-12, wherein each insert has a first end opposite a second end defining a height therebetween, wherein an opening extends transversely through said height between the first and second ends of the insert for receiving its corresponding connecting member.
14. The linkage as recited in clause 13, wherein at least part of the first end of each insert and part of the second end of each insert is covered by a portion of the body.
15. The linkage as recited in any of the preceding clauses 10-14, wherein the body comprises a first side extending from the first end to the second end and a second side extending from the first end to the second end and wherein each insert is sandwiched between the first and second sides of the body.
16. The linkage as recited in any of the preceding clauses 10-15, wherein the body comprises a first side extending from the first end to the second end and a second side extending from the first end to the second end and wherein each insert extends at least from the first side to the second side of the body.
17. The linkage as recited in any of the preceding clauses 10-16, wherein the first and second ends are arcuate.
18. The linkage as recited in any of the preceding clauses 10-17, wherein the portion of each end of the body penetrated by its corresponding connecting member is rounded.
19. The linkage as recited in any of the preceding clauses 10-18, wherein the body is formed by 3D printing with onyx plastics or nylons reinforced with a continuous fiber.
20. The linkage as recited in any of the preceding clauses 10-19, wherein the continuous fiber is fiber selected from the group of fibers consisting essentially of carbon fiber, Kevlar, and fiberglass fibers.
21. The linkage as recited in any of the preceding clauses 10-20, wherein the body has a tensile strength of at least 9000 lbf.
22. The linkage as recited in any of the preceding clauses 10-21, further comprising an opening penetrating from one side to an opposite side of the main body portion.
23. The linkage as recited in any of the preceding clauses 10-22, wherein the body is not tubular.
24. The linkage as recited in any of the preceding clauses 10-23, wherein each insert has a non-circular outer surface shape in cross-section perpendicular to such insert longitudinal axis.

## Claims

1. A linkage comprising:
a body formed by 3D printing, said body comprising,
a main body portion;
a first arm extending from a first side of the main body portion;
a second arm spaced apart from the first arm and extending from the first side of the main body portion;
a third arm extending from second side of the main body portion opposite the first side;
a fourth arm spaced apart from the third arm and extending from the second side of the main body portion;
a first opening formed through the first arm;
a second opening formed through the second arm, said second opening being axially aligned with the first opening;
a third opening formed through the third arm; and
a fourth opening formed through the fourth arm, said fourth opening axially aligned with the third opening.

2. The linkage as recited in claim 1 further comprising:
a first bearing in the first opening;
a second bearing in the second opening;
a third bearing in the third opening; and
a fourth bearing in the fourth opening.

3. The linkage as recited in claim 2 further comprising:
a first pin penetrating the first and second openings; and
a second pin penetrating the third and fourth openings.

4. The linkage as recited in any of the preceding claims, wherein the body is formed by 3D printing with onyx plastics or nylons reinforced with a continuous fiber, wherein the continuous fiber is fiber selected from the group of fibers consisting essentially of carbon fiber, Kevlar, and fiberglass fibers.

5. The linkage as recited in any of the preceding claims, wherein the body has a tensile strength of at least 9000 lbf.

6. The linkage as recited in any of the preceding claims, further comprising an opening penetrating from one side to an opposite side of the main body portion.

7. A linkage comprising:
a 3D printed body extending from a first end to a second end;
a first insert within the body proximate the first end, said first insert not extending beyond the first end;
a second insert within the body proximate the second end, said second insert not extending beyond the second end;
a first connecting member penetrating the first end and connected to the first insert; and
a second connecting member penetrating the second end and connected to the second insert.

8. The linkage as recited in claim 7, wherein the first connecting member is threaded to the first insert and the second connecting member is threaded to the second insert.

9. The linkage as recited in claim 7 or claim 8, wherein each insert has a first end opposite a second end defining a height therebetween, wherein an opening extends transversely through said height between the first and second ends of the insert for receiving its corresponding connecting member.

10. The linkage as recited in any of the preceding claims 7-9, wherein the body comprises a first side extending from the first end to the second end and a second side extending from the first end to the second end and wherein each insert is sandwiched between the first and second sides of the body.

11. The linkage as recited in any of the preceding claims 7-10, wherein the body comprises a first side extending from the first end to the second end and a second side extending from the first end to the second end and wherein each insert extends at least from the first side to the second side of the body.

12. The linkage as recited in any of the preceding claims 7-11, wherein the body is formed by 3D printing with onyx plastics or nylons reinforced with a continuous fiber, wherein the continuous fiber is fiber selected from the group of fibers consisting essentially of carbon fiber, Kevlar, and fiberglass fibers.

13. The linkage as recited in any of the preceding claims 7-12, wherein the body has a tensile strength of at least 9000 lbf.

14. The linkage as recited in any of the preceding claims 7-13, further comprising an opening penetrating from one side to an opposite side of the main body portion.

15. The linkage as recited in any of the preceding claims 7-14, wherein each insert has a non-circular outer surface shape in cross-section perpendicular to such insert longitudinal axis.
